(19) Europäisches Patentamt

European Patent Office

Office européen des brevets

(11) **EP 1 001 843 B1**

(12) **EUROPEAN PATENT SPECIFICATION**

(45) Date of publication and mention
of the grant of the patent:
**24.04.2002 Bulletin 2002/17**

(51) Int Cl.[7]: **B01J 12/00**, B01J 8/02,
B01J 19/00, B01J 19/08,
C01C 3/02

(21) Application number: **98933112.9**

(22) Date of filing: **02.07.1998**

(86) International application number:
**PCT/US98/13825**

(87) International publication number:
**WO 99/01211 (14.01.1999 Gazette 1999/02)**

(54) **METHOD OF INDUCTIVELY IGNITING A CHEMICAL REACTION**

VERFAHREN ZUR INDUKTIVEN ZÜNDUNG EINER CHEMISCHEN REAKTION

PROCEDE D'AMOR AGE PAR INDUCTION D'UNE REACTION CHIMIQUE

(84) Designated Contracting States:
**BE DE FR GB IT NL**

(30) Priority: **03.07.1997 US 51659 P**

(43) Date of publication of application:
**24.05.2000 Bulletin 2000/21**

(73) Proprietor: **E.I. DU PONT DE NEMOURS &
COMPANY INCORPORATED
Wilmington, Delaware 19898 (US)**

(72) Inventors:
• **KOCH, Theodore, A.
Wilmington, DE 19808 (US)**
• **MEHDIZADEH, Mehrdad
Wilmington, DE 19808 (US)**
• **BUEKER, David, Julian
Victoria, TX 77904 (US)**

(74) Representative: **Jones, Alan John
CARPMAELS & RANSFORD
43 Bloomsbury Square
London, WC1A 2RA (GB)**

(56) References cited:
**DE-A- 4 209 195         DE-A- 4 444 366
GB-A- 729 502           GB-A- 854 268
US-A- 2 443 423          US-A- 3 215 495**

• **PATENT ABSTRACTS OF JAPAN vol. 096, no.
007, 31 July 1996 & JP 08 074563 A (DENKI
KOGYO CO LTD;FUJI HEAVY IND LTD), 19 March
1996**

**Description**

Technical Field

This invention relates to a novel method of igniting a gas phase chemical reaction in the presence of a solid catalyst. More specifically but not by way of limitation, the invention relates to a continuous flow gas phase reaction wherein ammonia reacts with a hydrocarbon in the presence of oxygen and a platinum-group metal catalyst to produce hydrogen cyanide and the use of an induction coil within the reactor to inductively heat the metallic catalyst and ignite the exothermic reaction.

Background Art

The concept of using inductive heating to heat a catalyst during a gas phase chemical reaction at elevated temperature is generally known in the art. For example, U.S. Pat. No. 5,110,996 discloses a process for producing vinylidene fluoride by reacting dichlorofluoromethane with methane in an inductively heated reaction tube containing a non-metallic packing material and optionally a metallic catalyst.

Similarly, PCT patent application WO 95/21126 discloses the preparation of hydrogen cyanide by reacting ammonia and a hydrocarbon gas in an inductively heated quartz reactor tube. In this disclosure a platinum-group metal catalyst within the reactor tube is heated by the presence of an inductive coil helically wound around the exterior of the quartz tube. This coil is energized by an induction power source which could also supply pulsed power. For the particular endothermic reaction being employed in this reference, a frequency range of 0.5 to 30 MHz is suggested to maintain the reaction temperature between 600 and about 1,200°C. The induction coil wrapped around the exterior of the reactor tube is itself a metal tube through which cooling water is being circulated. The reference also suggests various forms of metal catalyst including metal gauze, ceramic substrate having metal dispersed on the surface or ceramic particles coated with metal provided that these catalysts have an electrical conductivity of at least 1.0 Siemens per meter such as to be effectively heated by induction.

US 3,215,495 describes an exothermic process for making hydrogen cyanide by the reaction of ammonia, a hydrocarbon gas and oxygen in the presence of a platinum metal. Catalyst. The process is carried out in a gas phase reactor having a porous screen placed between a porous radiation screen and the gaseous reactant stream. The reaction is self-sustaining following ignition using an electrical spark between two platinum wires that pierce a refractory fibre cover to contact the catalyst gauze pack.

It is also generally recognized in the art that hydrogen cyanide may be produced by either of two gas phase reactions involving the catalytic reaction of ammonia and a hydrocarbon. Thus hydrogen cyanide is most commonly produced industrially by either the exothermic Andrussow process or the endothermic Degussa process. In the Degussa process ammonia and typically methane are converted in the absence of oxygen to hydrogen cyanide and hydrogen. Since the reaction is performed at elevated temperatures (typically in excess of 1,200°C) and is endothermic, heat transfer is a significant pragmatic problem. In contrast, the Andrussow process employs oxygen (i.e., air) which results in an exothermic reaction with water as a by-product. The use of excess hydrocarbon and oxygen also affords the opportunity to supply the necessary heat energy to maintain the desired elevated reaction temperature. Thus the Andrussow process, may in principle, have an advantage over the Degussa process in terms of alleviating problems associated with heat transfer, but it is at a disadvantage relative to failure to produce a potentially valuable coproduct. In both the Andrussow and Degussa processes, the hot product emerging from the reactor must be cooled to a temperature below about 300°C to prevent thermal degradation from occurring.

In the Andrussow process, the catalytic reaction must be initiated by a high temperature ignition which has to be confined to the proximity of the catalyst and not allowed to propagated back into the combustible reactant stream entering the continuously fed reactor. Thus it is known in the art to employ porous thermal, spark and radiation barriers between the solid catalyst and the gaseous reactant stream and have a resistant heating wire embedded into the catalyst media. However, such a method for igniting the reaction has proven to be less than completely reliable. The present invention addresses this problem.

Disclosure of the Invention

In view of the above, it has now been discovered that the ignition of the process can be improved by placing the induction coil directly within the tubular reactor, providing for gas flow there through and using this coil directly as the induction source. The catalyst will be inductively heated to the ignition temperature of the process without a need for direct electrical contact. These improvements may in part be rationalized as being due to improved ability to control the spatial relationship between the induction coil and the inductively heated metallic catalyst, i.e., both more uniform radial distribution within the reactor and closer proximity. This in turn allows for scaling up to larger reactor cross sections without significantly reducing either conversion or selectivity even in cases of temperature sensitive gas phase reactions such as the production of hydrogen cyanide from ammonia, and a hydrocarbon in the presence of oxygen.

Thus the present invention provides an improved method for the ignition of a catalyzed gas phase reaction comprising the steps of:

(a) providing a gas phase reactor comprising;

(i) a reactor vessel comprising at least one gaseous reactant inlet means and at least one product outlet means for introducing gaseous reactant into and removing product from the reactor vessel, respectively,
(ii) a solid phase metallic catalyst media operatively positioned within the reactor vessel such as to make contact with gaseous reactant passing from the reactant inlet means to the product outlet means and operatively adapted such as be directly and inductively heated,
(iii) an induction coil means operatively positioned within the reactor vessel such as to inductively heat the solid phase metallic catalyst media and operatively positioned for the passage of gas there through, and
(iv) a porous thermal, spark and radiation barrier means operatively position between the solid phase metallic catalyst and the gaseous reactant for confining the chemical reaction to the region of the catalyst and preventing the reaction from propagating back towards the inlet;

(b) introducing gaseous reactants through the inlet and into the reactor vessel;
(c) igniting the reactants by inductively beating the solid phase catalyst media using the induction coil means as the inductive power source; and
(d) discontinuing the induction heating and sustaining the reaction temperature by use of the exothermic heat of reaction.

The present invention further provides an alternate embodiment of the method for the ignition of a catalyzed gas phase reaction of wherein the solid phase metallic catalyst media is operatively adapted such as be heated inductively further comprises at least one conductive susceptor means to increase the inductive efficiency during reaction start-up.

Brief Description of Drawings

Figure 1 is a cross-sectional view of one embodiment of a gas phase chemical reactor useful for performing the improved method of inductive ignition according to the present invention.
Figure 2 is a cross-sectional view of an alternate embodiment of a gas phase chemical reactor useful for performing the improved method of inductive ignition according to the present invention.

Modes for carrying Out the Invention

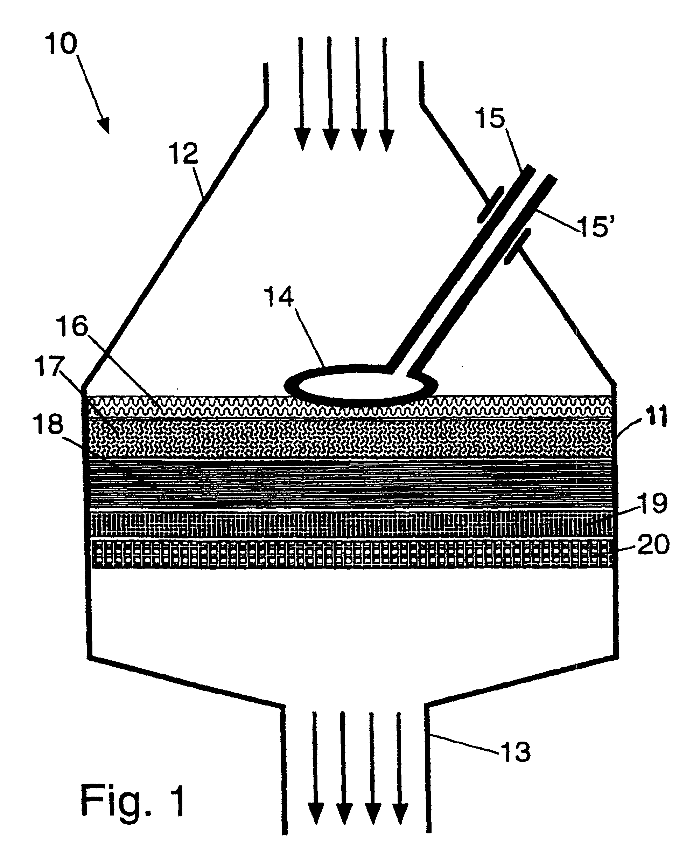

The improved method of inductively igniting a gas phase reaction according to the present invention, how it is incorporated into a reactor used to conduct a gas phase chemical reaction at elevated temperature, how it operates and differs from previously know inductively heated reactors and previous methods of ignition, and the advantages and benefits associated with its use can perhaps be best explained and understood by reference to the drawing. For example, Figure 1 illustrates a continuous gas phase reactor, generally designated by the numeral 10, which when operated according to the method of the present invention is particularly useful for producing hydrogen cyanide by what is commonly referred to as the Andrussow process. The Andrussow process typically involves the catalytic reaction of ammonia and a hydrocarbon, such as methane, in the presence of oxygen at elevated temperature, typically greater than 1100°C, to produce hydrogen cyanide according to the following exothermic reaction;

$$CH_4 + NH_3 + 3/2\ O_2 \rightarrow HCN + 3\ H_2O$$

It should be appreciated that although the improved method of inductively igniting a catalyzed gas phase reaction according to the present invention is being described and specifically illustrated relative to the high temperature gas phase production of hydrogen cyanide, it is felt that the invention should not be viewed as being limited to any given reaction. Many of the advantages and benefits associated with the improved method of inductive ignition are equally realized in other elevated temperature gas phase reactions and processes wherein the reaction, which is otherwise exothermic and self sustaining, initially requires ignition. As such any interpretation of the following description and claims should not be unduly limited.

As illustrated in Figure 1, the inductively ignited reactor 10 in this specific embodiment involves a generally cylindrical reactor vessel 11 having at one end a conical shaped inlet 12 through which the reactants methane, ammonia and oxygen (or, air) are introduced. At the other end is an outlet 13 for withdrawal of product hydrogen cyanide and water. Within the reactor vessel 11 is a circular loop coil 14 with leads 15 and 15' entering and exiting the reactor. This coil 14 is fabricated from metal tubing or metal rod (e.g., copper tubing or the like) and as such could have cooling water or other heat exchange medium passed there through. Also, the coil 14 is further adapted to act as the primary induction coil by being attached (not shown) to an induction power source. The circular loop of the coil is suspended across a portion of the interior of the reactor vessel 11 directly adjacent to a Fiberfrax blanket 16 which minimizes heat loss and provides a final filtration of the feed gas passing there through. Directly below the Fiberfrax blanket 16 is a layer of alumina foam which serves as a radiation shield 17 (i.e., shielding the reactant gaseous mixture entering the reactor from premature ignition). Below this radiation shield 17 is the metallic catalyst media 18. The catalyst 18 rests on a perforated ceramic under-support layer 19 having holes of smaller diameter than the catalyst particles being supported. Below this ceramic under-support is a second ceramic under-support 20 of even larger perforations.

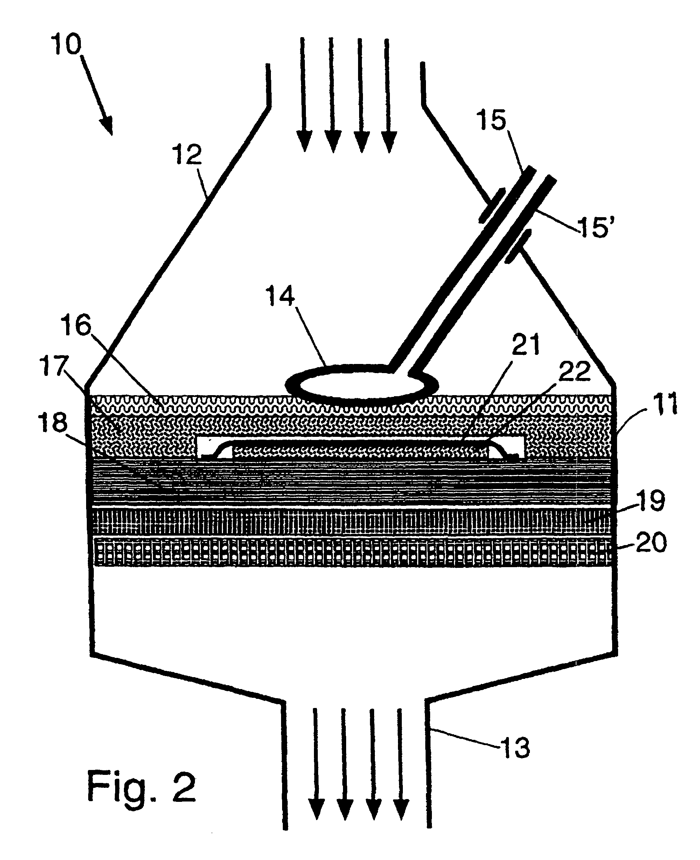

This specific embodiment being illustrated in Figure 1 is intended to demonstrate how the improved inductively ignited reactor of the present invention is applicable and useful for a variety of different types of high temperature gas phase catalytic reactions. More specifically and as illustrated, the catalyst media can be any solid phase particulate material capable being inductively ignited (heated) and simultaneously capable of catalyzing the desired gas phase reaction. However, it should be further appreciated that the solid phase catalyst media is not limited to any given physical form including being a particulate material. Generally, this catalyst media (as well as the susceptor used in the alternate embodiment of Figure 2) can also be in the form of one or more layers of metallic fabric, gauze (e.g., laser perforated metal foil, woven or non-woven wire mesh, or the like), discrete planar metallic objects (e.g., metal foam) or multiple layers of pellet-type catalyst particles. Such forms of catalyst are more fully disclosed and described in PCT patent application WO 95/21126 and commonly assigned, copending U.S. patent application number 08/887,549 filed July 3, 1997. Thus, for example, in the specifically preferred embodiment employing the Andrussow process the catalyst 18 is a plurality of layers of platinum metal fabric, wire or gauze (e.g., Pt-Rh wrapped on alumina or the like).

In any induction heating system, only a part of the electric power that enters the coil is actually dissipated into the intended workpiece, in this case the catalyst media. The rest of the power is dissipated into the coil itself, which is usually made of copper. The power dissipated in the coil is normally removed by a cooling medium such as water, which is flowing within the coil. The ratio of the power dissipated into the intended workpiece to the total power is called coil efficiency. In the process of this invention, coil efficiency is important because the speed of ignition, and whether ignition temperature is achieved depends on the input power to the catalyst medium. In addition, in some cases cooling of the coil via water or other liquid may not be feasible due to safety considerations.

Coil efficiency is dependent upon a number of variables, mainly conductivity of the coil and the workplace, and the geometrical factors such as distance of the coil from the workpiece. In a given induction heating system the coil efficiency is maximized for a certain conductivity range of the workpiece, in this case the catalyst media. Too low or too high conductivity lead to low efficiency.

In certain cases, the electrical conductivity of the catalyst medium is such that the coil efficiency is too low. One example of this is when the catalyst is electrically non-conductive. Another example is when the catalyst has too much electrical conductivity; and yet another example is when the distance of the coil to catalyst needs to be large in relation to the conductivity of the catalyst. The present invention provides for a method of ignition in these cases wherein a conductive susceptor of appropriate geometry and conductivity is placed in the vicinity of the induction coil and the catalyst medium. Figure 2 illustrates one such alternate embodiment employing a conductive susceptor. As shown in Figure 2, a platinum gauze 21 is used as a susceptor and is held away from the main body of the catalyst medium 18 by a porous ceramic layer 22 (all other elements and function are identified by numbers as previously described above with respect to Figure 1). The coil 14 in this embodiment is more efficient in heating of the susceptor layer 21 for two reasons. First, the higher resistance of the thin susceptor layer increases the induction efficiency, and second, due to thermal isolation between the susceptor layer and the main catalyst medium, the heat generated in the susceptor is not conducted away; therefore a high ignition temperature in the susceptor is easier to achieve. After the reaction starts at the susceptor layer it is propagated to the main body of the catalyst medium.

In many cases the usage of a liquid cooler such as water introduced through the loop coil 14 is not feasible due to a potential for leakage of the cooling medium, and the possibility of safety hazard or process contamination. In such cases instead of a hollow metal stock, a solid stock of metal may be used for the construction of the induction coil. The solid metal stock, due to higher mass, would not heat as fast, and gives the catalyst medium or the susceptor enough time to heat and ignite before the temperature rise of the coil. The temperature rise of coil beyond a certain limit may have many negative effects such as ignition of the process at the wrong location, and deterioration or melting of the coil material. In addition, a heat-up of the coil would raise the electrical resistance, and increase the energy delivery to the coil instead of the catalyst medium.

When the usage of liquid cooler such as water is not feasible, and also the cooling of the coil is necessary, a stream of cold gas such as air can be passed through the hollow coil, conductor. One suitable method for generation of the cold gas can be the use of a vortex tube. A vortex tube, which works on the basis of expansion of compressed air, is an inexpensive cooling device and uses only compressed air, which is available in most industrial sites.

The use of a thermally insulating layer 16 and/or a radiation shield layer 17 between the induction coil and the heated catalyst media (referred to herein as the "porous thermal, spark and radiation barrier means") affords the opportunity to use such reactors in a number of different reactions and minimizes temperature rise (i.e., in the flow of cooling media) through the induction coil. This barrier means functions primarily to prevent the reaction from flashing back towards the reactant inlet and as such serves to confine the gaseous reaction to the region of the catalyst. Generally any porous material as generally known in the art can be employed; including by way of example but not limited thereto, porous ceramic foams or ceramic coated materials, thermally stable minerals and fibers, combination of the same and the like. Typically when a diffuser plate is employed for internal support it is made of quartz or non-conductive ceramic. Alternatively the diffuser plate can be made from a ceramic foam. The diffuser plate can also serve to electrically insulate the induction coil from the inductively heated catalyst.

The actual construction of the improved reactor according to the present invention involves any of the conventional materials generally known in the art as being useful in making inductively heated reactors. Preferably, the reactor is made of materials such as quartz, quartz lined materials, ceramic, ceramic coated materials, stainless steel or the like. It is also envisioned that various other coatings or protective cladding can be advantageously employed depending on the particular reaction conditions and reactions involved. The particular fabrication techniques employed to assemble the reactor can similarly be any such methods generally known in the art including by way of example but not by limitation, welding of metallic components, and/or bonding using ceramic-epoxy type adhesives or compressive gaskets and the like. In general the choice of particular materials as well as catalyst media depends on what particular chemical reaction and conditions are to be used.

In principle, any elevated temperature, catalyzed, gas phase chemical reaction can be performed in the improved reactor according to the present invention. Preferably, a platinum-group metal catalyst media is employed to manufacture hydrogen cyanide by reacting ammonia and a hydrocarbon in the presence of oxygen or air. Further details of such reaction and methods of accomplishing the same can be found in the incorporated references WO 95/221126 and U.S. patent application 08/887,549.

The following examples are presented to more fully demonstrate and further illustrate various individual aspects and features of the present invention and the showings are intended to further illustrate the differences and advantages of the present invention. As such the examples are felt to be non-limiting and are meant to illustrate the invention but are not meant to be unduly limiting.

EXAMPLES

A lab scale quartz reactor of 2 inch (5.08 cm) diameter was fabricated and tested to evaluate the feasibility of using an internal copper inductor to ignite the reaction. The reactor consisted of a one turn cooper coil, a 3/16 inch (0.476 cm) thick ceramic foam catalyst support, 40 layers of platinum gauze and a final 3/16 (0.476 cm) thick ceramic foam catalyst support. The induction frequency was 26 MHz. Tests were conducted to evaluate ignition verses, power input as well as to check to see if the presence of a copper coil inside of the reaction chamber would cause any adverse effects. The results are as follows:

|  | FLOWS |  |  | IGNITION |
|---|---|---|---|---|
| $NH_3$ | $CH_4$ | AIR | POWER | TIME |
| 1.26L/min | 1.16L/min | 6.67L/min | 200 Watts | ~85 sec. |
| 1.26L/min | 1.16L/min | 6.67L/min | 250 Watt | ~40 sec. |
| 1.26L/min | 1.16L/min | 6.67L/min | 300 Watts | ~20 sec. |
| 1.26L/min | 1.16L/min | 6.67L/min | 350 Watts | ~10 sec. |

As shown in the above table, light off could be achieved in a little as 10 seconds. No short term adverse effects could be found due to the presence of copper while lighting off the reaction. Flow rates used were less than that of the typical plant light off due to the limiting amount of HCN that can be produced in the lab.

A test set up was assembled to verify the heating of the catalyst at the flow rate used at light off. Two forms of catalyst were used, unpacked (fresh) and compressed (used). Packing (compression) of the catalyst occurs during normal operation and the need to light off the reactor could arise at varying stages of compression. Nitrogen was used to simulate light off flow conditions. Unpacked catalyst was tested first. The results show the ability to heat to the desired light-off temperatures at the light off flow rates. Initial testing of the compressed catalyst bed yielded poor heating. Testing with the new unit showed a greater ability to heat but only with the coil being in close proximity to the catalyst bed. The phenomenon of poor heating can be attributed to two factors. The first being the electrical conductivity of a compressed bed is too high to effectively heat with induction heating and the second it is the heat transfer of the compressed bed is greater than the unpacked bed. The results are as follows:

Test results Unpacked Catalyst Bed

Frequency: 8.79 MHz

| Run # | Distance from Coil | Flow Rate | Input Power | Max. Temp. |
|---|---|---|---|---|
| 1 | 1.27 cm | 566 SLPM | 1.2 kW | 367°C |
| 2 | 1.27 cm | 566 SLPM | 1.5 kW | 657°C |
| 3 | 1.9 cm | 566 SLPM | 3.0 kW | 406°C |
| 4 | 0.83 cm | 1217 SLPM | 1.5 kW | 70°C |
| 5 | 1.25 cm | 1217 SLPM | 1.8 kW | 120°C |
| 6 | 1.25 cm | 1217 SLPM | 2.1 kW | 204°C |
| 7 | 1.25 cm | 1217 SLPM | 2.4 kW | 380°C |

Test results Compressed Catalyst Bed

| Run # | Distance from Coil | Flow. Rate | Freq. kHz | Input Power | Max. Temp. |
|---|---|---|---|---|---|
| 1 | 2.54 cm | 1217 SLPM | 430 | 5 kW | 45°C |
| 2 | 1.9 cm | 1217 SLPM | 432 | 5 kW | 62°C |
| 3 | 1.27 cm | 1217 SLPM | 440 | 5 kW | 107°C |
| 4 | 0.63 cm | 1217 SLPM | 453 | 5 kW | 195°C |
| 5 | 0.31 cm | 1217 SLPM | 459 | 5 kW | 276°C |

Test results with susceptor layer

To achieve the proper heating at a greater distance the top two layers of catalyst mesh was isolated by inserting a 0.5 cm thick ceramic foam between the balance of the bed and the top two layers. This isolation increased the electrical resistance of the mesh being heated as well as decreased the thermal conductivity. The results are shown below.

| Run # | Distance from Coil | Flow Rate | Freq. kHz | Input Power | Max. Temp. |
|---|---|---|---|---|---|
| 1 | 2.54 cm | 1217 SLPM | 445 | 5 kW | 324°C |

Industrial Applicability

The benefits and advantages associated with the improved method of inductively igniting a catalyzed gas phase reaction according to the present invention are felt to be numerous and significant. First and foremost, the use of the inductive source coil within the reactor vessel in the proximity of the metallic catalyst media leads to more uniform control of temperature and ignition. Also the presence of the induction loop within the reactor affords the opportunity to scale-up particularly relative to the use of larger cross sectional dimensions. The improved method of non-contact ignition alleviates certain practical problems associated with previous use of electrical leads and resistive heating and in particular problems associated with the necessity of such leads passing through the thermal, spark and radiation barrier. And the improved method of ignition allows one to perform an Andrussow type process in larger reactors with more flexibility of design as well as method of operation.

Having thus described and exemplified the invention with a certain degree of particularity, it should be appreciated that the following claims are not to be so limited but are to be afforded a scope commensurate with the wording of each element of the claim and equivalents thereof.

**Claims**

1.  A method for the ignition of a catalyzed gas phase reaction comprising the steps of:

    (a) providing a gas phase reactor comprising;

    *(i)* a reactor vessel (11) comprising at least one gaseous reactant inlet means (12) and at least one product outlet means (13) for introducing gaseous reactant into and removing product from said reactor vessel, respectively,
    *(ii)* a solid phase metallic catalyst media (18) operatively positioned within said reactor vessel such as to make contact with gaseous reactant passing from said reactant inlet means to said product outlet means and operatively adapted such as be directly and inductively heated,
    *(iii)* an induction coil means (14) operatively positioned within said reactor vessel such as to inductively heat said solid phase metallic catalyst media and operatively positioned for the passage of gas there through, and
    *(iv)* a porous thermal, spark and radiation barrier means (16 and 17) operatively positioned between said solid phase metallic catalyst media and the gaseous reactant for confining the chemical reaction to the region of said catalyst and preventing the reaction from propagating back towards said inlet;

    (b) introducing gaseous reactants through said inlet and into said reactor vessel;
    (c) igniting said reactants by inductively heating said solid phase catalyst media using said induction coil means as the inductive power source; and
    (d) discontinuing the induction heating and sustaining the reaction temperature by use of the exothermic heat of reaction.

2.  A method for the ignition of a catalyzed gas phase reaction of Claim 1 wherein said solid phase metallic catalyst media operatively adapted such as be heated inductively further comprises at least one conductive susceptor means to increase the inductive efficiency during reaction start-up.

**Patentansprüche**

1.  Verfahren für die Zündung einer katalysierten Gasphasenreaktion, umfassend die Stufen von:

    (a) zur Verfügung stellen eines Gasphasenreaktors, umfassend:

    (i) einen Reaktorkessel (11), umfassend mindestens ein gasförmiges Reaktanteneinlaßmittel (12) und mindestens ein Produktauslaßmittel (13) zum Einführen von gasförmigem Reaktanten in und Entfernen von Produkt aus dem Reaktorkessel,
    (ii) ein metallisches Festphasenkatalysatormedium (18), betriebsbereit in dem Reaktorkessel angeordnet, um so in Kontakt mit gasförmigem Reaktanten zu treten, der von dem Reaktanteneinlaßmittel zu dem Produktauslaßmittel geht, und betriebsbereit angepaßt, um so direkt und induktiv erhitzt zu werden,
    (iii) ein Induktionsspulenmittel (14), betriebsbereit in dem Reaktorkessel angeordnet, um somit induktiv die metallischen Festphasenkatalysatormedien zu erhitzen und betriebsbereit für den Durchgang von Gas dadurch angeordnet,
    (iv) ein poröses, thermisches Funken- und Strahlungssperrmittel (16 und 17), betriebsbereit angeordnet zwischen den metallischen Festphasenkatalysatormedien und dem gasförmigen Reaktanten zum Begrenzen der chemischen Reaktion auf den Bereich des Katalysators und Abhalten der Reaktion vom Zurückwandern zu dem Einlaß,

    (b) Einführen von gasförmigen Reaktanten durch den Einlaß und in den Reaktorkessel,
    (c) Zünden der Reaktanten durch induktives Erhitzen der Festphasenkatalysatormedien unter Verwenden des Induktionsspulenmittels als der induktive Energiequelle und
    (d) Unterbrechen des Induktionserhitzens und Beibehalten der Reaktionstemperatur durch Verwendung der exothermen Reaktionshitze.

**2.** Verfahren für die Zündung einer katalysierten Gasphasenreaktion nach Anspruch 1, wobei das metallische Festphasenkatalysatormedium, betriebsbereit angepaßt, um so induktiv erhitzt zu werden, ferner mindestens ein konduktives Suszeptormittel zum Erhöhen der induktiven Wirksamkeit während Reaktionsbeginn umfaßt.

**Revendications**

**1.** Procédé pour l'allumage d'une réaction en phase gazeuse catalysée comprenant les étapes:

(a) de fourniture d'un réacteur en phase gazeuse comprenant:

(i) un récipient de réacteur (11) comprenant au moins un moyen d'entrée de réactif gazeux (12) et au moins un moyen de sortie de produit (13) pour introduire un réactif gazeux dans ledit récipient de réacteur et retirer un produit à partir de celui-ci, respectivement,
(ii) un milieu de catalyseur métallique en phase solide (18) positionné de manière fonctionnelle dans ledit récipient de réacteur de manière à établir un contact avec un réactif gazeux passant dudit moyen d'entrée de réactif audit moyen de sortie de produit et adapté de manière fonctionnelle pour être chauffé directement et par induction,
(iii) une bobine d'induction (14) positionnée de manière fonctionnelle dans ledit récipient de réacteur de manière à chauffer par induction ledit milieu de catalyseur métallique en phase solide et positionnée de manière fonctionnelle pour le passage d'un gaz à travers celle-ci, et
(iv) une barrière poreuse, thermique, contre les étincelles et les rayonnements (16 et 17) positionnée de manière fonctionnelle entre ledit milieu de catalyseur métallique en phase solide et le réactif gazeux pour limiter la réaction chimique à la zone dudit catalyseur et empêcher la réaction de se propager en arrière vers ladite entrée;

(b) d'introduction de réactifs gazeux à travers ladite entrée et dans ledit récipient de réacteur;
(c) d'allumage desdits réactifs à l'aide d'un chauffage par induction dudit milieu de catalyseur en phase solide en utilisant ladite bobine d'induction en tant que source de puissance d'induction; et
(d) d'interruption du chauffage par induction et de maintien de la température de réaction par l'utilisation de la chaleur exothermique de réaction.

**2.** Procédé pour l'allumage d'une réaction en phase gazeuse catalysée suivant la revendication 1, dans lequel ledit milieu de catalyseur métallique en phase solide adapté de manière fonctionnelle pour être chauffé par induction comprend en outre au moins un moyen suscepteur conducteur pour augmenter le rendement d'induction durant le démarrage de la réaction.

Fig. 1

Fig. 2